# EUROPEAN PATENT SPECIFICATION

(11) **EP 0 302 463 B1**
(45) Date of publication and mention of the grant of the patent: **02.06.1993**
(21) Application number: 88112592.6
(22) Date of filing: 03.08.1988
(51) Int. Cl.: H05B 33/06, H05B 33/12

(54) **Electroluminescence lamp and method of use thereof**
Elektrolumineszente Lampe und Methode zu ihrer Anwendung
Lampe électroluminescente et méthode d'utilisation de celle-ci

(30) Priority: 07.08.1987 JP 122006/87; 27.08.1987 JP 130352/87; 24.02.1988 JP 23134/88
(43) Date of publication of application: 08.02.1989
(73) Proprietor: Mitsubishi Cable Industries, Ltd., Amagasaki-shi Hyogo 660 (JP)
(72) Inventor: Hirotaka, Ito, Higashimukoujima Amagasaki-shi Hyogo 660 (JP); Jinichi, Taniguchi, Higashimukoujima Amagasaki-shi Hyogo 660 (JP); Hirokazu, Kuzushita, Higashimukoujima Amagasaki-shi Hyogo 660 (JP); Atsushi Ohhori c/o Minoshima Works, Arida-shi Wakayama 649-03 (JP)
(74) Representative: Selting, Günther, Dipl.-Ing.

(56) References cited:
- DE-A- 3 526 347
- DE-A- 3 638 858
- US-A- 3 317 722
- US-A- 3 430 088

## Description

### 1. Field of the Invention

The present invention relates to a flat-plate-shaped electroluminescence lamp (hereinafter referred to as an EL lamp) using an electroluminescence element (hereinafter referred to as an EL element) for a light source, specifically to an EL lamp having a mechanical tolerance endurable against the bending load applied in attaching to and detaching from a power supply outlet in a repeated manner, and a method of use thereof.

EL refers to a luminescence when a voltage is applied to a luminous layer wherein a phosphor such as zinc sulfide is doped with the materials of luminescence center such as manganese and copper. In the luminous layer whereto a voltage is applied, the materials of luminescence center (atoms serve to cause luminescence) are excited to the unstable state of high energy from the stable state of low energy, and when returning again to the stable state of low energy, they emit an excessive energy as light. The EL element has various features such that the thickness of the luminous layer can be made very thin, for example, as thin as several dozens of microns or less, uniform light is obtainable from the whole luminous surface, various colors of luminescence are obtainable, and a heat generating phenomenon does not occur. At present, although having problems of brightness and life, it has been considered to be applicable to wall illumination with the whole wall acting as a light source and small-size, light-weight displaying apparatuses in place of cathode ray tubes, and has been put in practical use partly for back light of meters for automobiles, ships, aeroplanes and the like, back light source of liquid crystal displays, displaying portions of portable measuring equipment, panel displays for personal computers and the like.

As described above, the EL element differs basically from other luminous body in that the luminous layer thereof is as thin as about several dozens of µm, and the conventional EL lamps have made use of this feature to a maximum extent, and have been used dedicatedly for thin stationary types wherein no mechanical tolerance is required virtually. For example, in the U.S. Patent No. 4,626,742, an EL lamp is disclosed wherein an EL element is formed on a thin film composed of polyethylene terephthalate of 127-178 µm (0.005 - 0.007 inch) in thickness. This EL lamp is hard to be said to have a satisfactory mechanical tolerance, and therefore has a problem of easy deformation by an external force, but because of this thinness, it is suitable for stationary use at a narrow place, for example, in a small-sized electronic component.

On the other hand, the present inventors have achieved the present invention on the basis of a novel finding that in quite the reverse to the conventional orientation of the development in the EL lamps, the flat-plate-shaped EL lamp having a large mechanical tolerance as the whole EL lamp shows an unexpected effect that it can respond to various requests in recent years as described later even if the thickness thereof becomes a little larger.

US-A-3 317 722 discloses an EL lamp having a reinforcement of acrylglas or the like containing the EL light emitting part. The electrodes of the light emitting part are connected to flexible wires extending apart of the reinforcement and being connected to an ordinary pronged electric plug which may be inserted into a conventional power-supply outlet. This EL lamp structure needs a separate holder for fixing and holding the lamp in the desired position.

It is an object of the present invention to provide an EL lamp that can be easily attached to or detached from a power-supply outlet and which does not need a separate holder for positioning.

This object is solved, according to the invention, with the features of claim 1.

The EL lamp of the present invention comprises an EL light emitting part and a connector part. Said EL light emitting part comprises an EL element which is a light source, both electrodes, and the like.

Furthermore, human fingers with which an EL lamp of the present invention is to be held is used for convenience in prescribing a mechanical tolerance endurable against the bending load, and attaching and detaching of the EL lamp to and from the outlet is not necessarily conducted only by human fingers but can also be conducted by, for example, fingers of a robot.

Remarkable effets of the EL lamp of the present invention are enumerated as follows:
(1) One of great applications of the EL lamp is back light of various equipment. In producing these equipment, conventionally such working procedures have been adopted that the EL lamp is installed at a predetermined place in the process of assembling the equipment, and the both electrode terminals thereof are soldered, or the connector part thereof is connected to a predetermined outlet by hand work, and subsequently another member necessary for equipment is installed on the EL lamp to cover the EL lamp. The necessity of such a complicated work is due to the thinness and fragility which is a feature of the conventional EL lamp. However, recently the request for further reducing the cost by simplifying the production of equipment has been raised. In this point, the EL lamp of the present invention has a great mechanical tolerance enough to endure the bending load applied in attaching to and detaching from the outlet in a repeated manner, and therefore, for example, in the equipment to be produced, a necessary space at a minimum for installing the EL lamp is provided in the portion corresponding to the place where the EL lamp is desired to be installed and the assembling work is completed, and finally the EL lamp is inserted into the above-mentioned space from the side wall of the equipment and simultaneously the connector part of the EL lamp can be connected to the outlet in the equipment.
(2) The EL lamp has a general problem that the brightness is reduced gradually by moisture. Therefore, in an equipment incorporating the conventional stationary type EL lamp, there is a problem that the work of replacing the EL lamp whose brightness has been reduced is not easy, or only a high-class EL lamp excelling in moisture proofing can be used. On the other hand, the EL lamp of the present invention has advantages such that it can be easily insert-attached and can be attached and detached repeatedly, and therefore the EL lamp is attached to be used only when required and is detached to be stored in the drying room when not required, or a defective EL lamp is easily replaced and is not necessarily to be high quality in moisture proofing.
(3) Since the EL lamp is a plane illuminating body, it is convenient in the case of illuminating in a certain direction by installing it in a stationary fashion on the ceiling or the back wall of the front seat in the room of an automobile or on the side wall of a residential room, but when illumination in the downward or upward direction from the above-mentioned each place is desired, the EL lamp is required to be installed all the time in the state of protruding from the mounting wall, and this not only spoils beautiful sight in the room, but also has a risk of damaging the EL lamp by a human unconscious behavior.
   On the other hand, the EL lamp of the present invention can be attached and detached repeatedly, and can be attached to the outlet and used only when required, and therefore the above-mentioned problem is not raised even if installed in the direction of protruding from the side wall. As further described later, when the EL lamp of the present invention is used together with a means capable of changing the illuminating direction thereof, the problem of beautiful sight in the room and the problem of damaging the lamp itself are further eased and the direction of illumination can also be changed.
(4) In the case where the EL lamp is used by the method as described above in items (1) -(3), it is desirable that the transport and carrying thereof can be easily performed. The EL lamp of the present invention has a mechanical tolerance endurable against the bending load applied in attaching to and detaching from the outlet in a repeated manner, and therefore there is less possibility of damage even if handled a little roughly in the factory, and, for example, a card type EL lamp of card size or name card size can be carried in a dress pocket, a handbag or the like.

The EL lamp of the presenct invention is indispensable to have a mechanical tolerance endurable against the bending load applied in attaching to and detaching from the outlet in a repeated manner, for example, not less than 5 times, preferably more than 10 times, and more preferably more than 100 times. Specifically, an EL lamp to be tested passes as the EL lamp of the present invention provided that it has a mechanical tolerance endurable against the bending load (load at breakage) of 30 kg or more measured according to the method and conditions provided in JIS K-6911 (note that only the provision on the width of test piece is changed to the EL lamp to be tested itself). In addition, the EL lamp is particularly preferable to have a high mechanical characteristic of the tolerance endurable against the bending load of at least 50 kg and particularly the bending load of 80 kg when measured by the above-mentioned method. Furthermore, where measured by the above-mentioned method in accordance with JIS K-6911, the deflection when the bending load of 5 kg is applied is particularly preferable to be within 5 mm.

In the present invention, the EL lamp having a reinforcement giving it a mechanical tolerance as mentioned above may be realized by various methods and structures. An EL lamp is attached to and detached from the outlet in a manner that a portion reinforced with reinforcement is held by fingers. Said reinforcement giving an EL lamp a mechanical tolerance endurable against bending load applied in attaching to and detaching from the outlet in a repeated manner becomes a reinforcement member of an EL lamp, and accordingly the reinforcement may be installed over the whole of the EL lamp, or in a beam shape or in a net shape, having no particular limitation. For the EL lamps having a reinforcement capable of providing such a necessary mechanical tolerance, there are enumerated a structure wherein the reinforcement is a substrate and which comprises that substrate and an EL light emitting part (hereinafter referred to as the substrate type) and a structure wherein the reinforcement is a casing having one or more light transmitting parts and the EL light emitting part is housed in that casing (hereinafter referred to as the casing type).

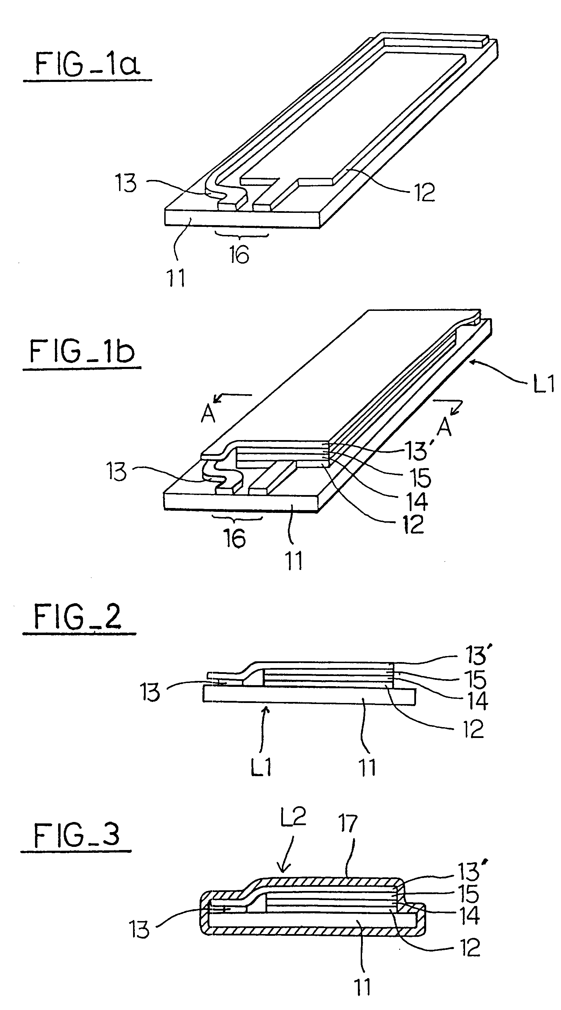

The substrate type, as exemplified in Fig. 1 - Fig. 4, has an advantage of obtaining an unexpectedly thin EL lamp while having a necessary mechanical tolerance by forming the EL light emitting part on the substrate and forming terminals of both electrodes in the EL light emitting part at one end on the substrate to constitute a connector part. In this case, as shown in Fig. 1, the terminals of the both electrodes may be installed in an arranged fashion at one end on one surface of the substrate, may be installed in a separate fashion, or may be installed on the front and rear surfaces of the substrate, responding to each position of the both electrodes of the power-supply outlet. Since the EL element is generally inferior in waterproofing, in the substrate type, at least the EL light emitting part is covered wholly with a suitable waterproof film, preferably together with the substrate (excluding the terminals of the both electrodes).

There are exemplified for the substrate, for example, synthetic resins such as acryl resin, acrylonitryl butadiene styrene resin (ABS), polyvinyl chloride resin (PVC), fiberglass-reinforced epoxy resin and fiberglass-reinforced phenol resin, and insulated metal substrates having an electrically insulating resin layer of epoxy resin, fiberglass-reinforced epoxy resin, polyethylene, polyethylene terephthalate, polyvinyl chloride or the like on a metal material for structure such as iron, stainless steel, aluminum, copper, bronze, nickel, compound of aluminum and copper or compound of copper and nickel.

The thickness of the substrate differs depending on the material of the substrate, and in the case of synthetic resin materials, it is generally 300 - 5000 µm, preferably 500 - 2000 µm, and in the case of insulating metal substrate materials, the substrate having an electrically insulating layer of 40 - 200 µm, particularly 50 - 100 µm in thickness on a metal layer of 100 - 1000 µm, preferably 200 - 500 µm in thickness is preferable.

As mentioned above, the substrate as a reinforcement functions as a reinforcement member for the EL lamp and gives an EL lamp a mechanical tolerance endurable against the bending load applied in attaching to and detaching from a power supply outlet in a repeated manner. Thus, the substrate is not necessarily provided to the whole of the EL lamp and may be provided in a netlike or latticed manner.

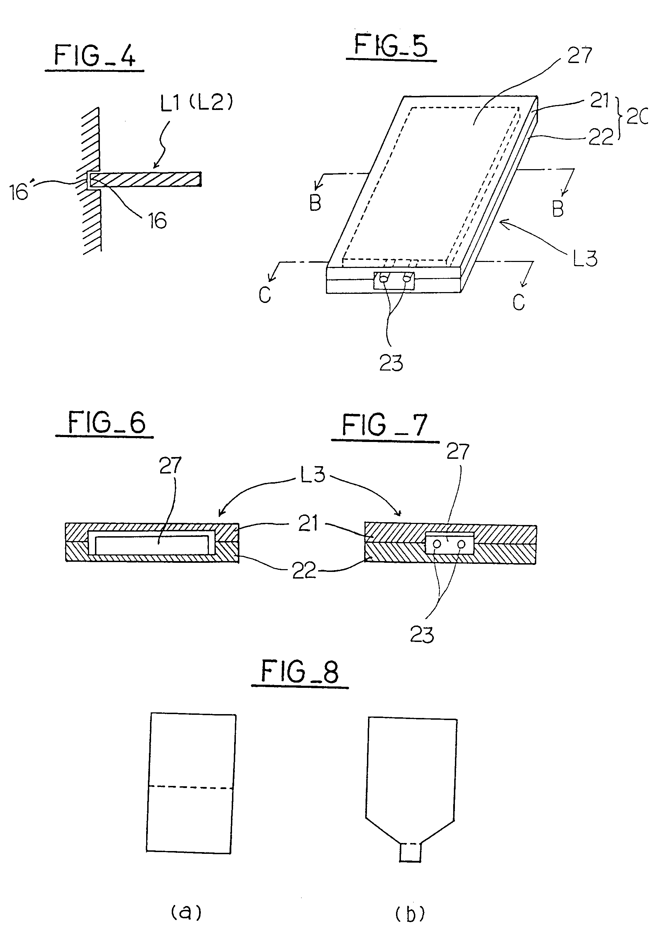

In the case type, the EL light emitting part is housed in a casing of different structures such as a half-divided case, a capsule type case with a lid, or a casing of a type wherein the insert port is melted and sealed after the EL light emitting part has been loaded as shown in Fig. 5 - Fig. 9, and the both electrodes thereof are connected electrically to the connector part mounted on the outer surface of a proper portion of the casing, and the casing functions as a member giving a required machanical tolerance. The constituent material of the casing may be a synthetic resin or an insulating substrate material like the above-mentioned constituent material of the substrate, but at least one side of the case corresponding to the luminous surface of the EL light emitting part mounted in the interior thereof is formed with a light transmitting material, for example, polycarbonate, acryl resin or glass. Needless to say, the whole of the case may be formed with such a light transmitting material.

Unlike the above-mentioned substrate, the casing has a three-dimensional structure, and the aspect of light-weight and hard based on the three-dimensional structure has a greater effect of giving the mechanical tolerance against the bending load than the substrate has. Accordingly, in general, the thickness of the constituent material of the casing is satisfactorily about 1/2 - 1/3 of the thickness of the substrate.

In the case type, the casing itself is of waterproof, and has an advantage that a drying agent is stored as required in the casing along with the EL light emitting part to keep the inside of the casing in the dried state and thereby the life of the EL element can be extended.

For the drying agent, for example, an agent of powder shape, granular shape or sheet shape composed of silica gel, zeolite, active carbon, magnesium oxide, calcium oxide or calsium carbonate is used, and above all, the sheet-shaped drying agent can function as a spacer for installing the EL light emitting part in a fixed fashion in the casing. For the sheet-shaped drying agent, aspects of woven fabric and non-woven fabric carrying the above-mentioned drying agent, films (particularly, plastic films such as nylon, polyethylene or polyurethane) coated with the drying agent, a layer of drying agent installed between films, and a film formed by kneading the drying agent therein are exemplified. The thickness thereof may be determined properly depending on the thickness of the casing, the thickness of the EL light emitting part and the like, but normally it is about 0.1 - 10 mm, preferably about 0.5 - 5 mm.

The EL lamp of the present invention is convenient when used together with a means for changing the illuminating direction thereof. For a means having such a function , for example, a unit consisting of a means for changing the illuminating direction of an EL lamp, an outlet-side connection part and an EL lamp-side connection part, and an outlet providing a means capable of changing the illuminating direction of the EL lamp are enumerated.

Also, in the using method of the present invention wherein the power supply outlet has an opening part capable of engaging the connector part of the EL lamp, the outlet also plays a role of supporting the connector part, and particularly, by installing such an outlet in an automobile, a portable EL lamp of the present invention can be provided for the use in the automobile.

The shape of the EL lamp has no particular limitation, but the card shape is preferable because of easy carrying. In the case of the card-shaped EL lamp, the external dimensions thereof are as follows. The width (length of the side having the connector part) is 30 - 300 mm for both of the substrate type and the case type, the length is 30 - 300 mm also for the both, and the thickness is 0.5 - 10 mm for the substrate type and 2 - 30 mm for the case type.

In the EL lamp in accordance with the present invention, the EL element as a light source has no particular limitation, and the element having been put in practical use so far suffice for use, and for example, thin-film EL element such as an element of double insulation structure operated with an AC voltage or a pulse voltage, and powder type EL element such as the DC EL element operated with DC pulse voltage and the AC EL element operated with AC are available, and the manufacture of the EL element itself has only to be performed in a commmonplace manner by the conventionally known method.

The EL element can be varied in brightness by the applied voltage, and is operated with an AC or DC voltage, and the operating voltage thereof includes various kinds. Furthermore, the EL element can be varied in brightness also by frequency. For reference, AC driving voltages and frequencies for the EL element which have been developed up to the present are about 40 - 250 V in voltage and about 50 - 1000 Hz in frequency.

As described above, the EL element includes the ones by DC or AC operation and the ones having different driving frequencies, and in the EL lamp of the present invention, an EL element operating at an arbitrary voltage and frequency has only to be used as a light source in response to the application thereof.

Furthermore, in order to give the EL lamp of the present invention a decorative function, the EL element having various colors of luminescence may be used, and further by installing accessories such as a mirror and a timepiece together with it, the application for portable use is also expanded.

In the manufacture of the substrate type EL lamp of the present invention, the method of installing electrodes on the substrate has no particular limitation, and the already-known method, for example, etching of copper-lined substrate, bonding of copper foil onto the substrate by means of an adhesive and coating of conductive paint are exemplified. The terminals of the both electrodes forming the connector part of the EL lamp may be formed simultaneously in forming the electrodes by the above-mentioned etching method, or only the terminals may be formed separately with copper foil or thin copper wires, being connected to the electrodes.

### Brief Description of the Drawings

Fig. 1a is a perspective view of the one example of a substrate providing an electrode layer which is used for an EL lamp of the present invention.

Fig. 1b is a perspective view of a substrate type EL lamp using the substrate as shown in Fig. 1a.

Fig. 2 is a cross-sectional view taken along line A-A of the EL lamp in Fig. 1b.

Fig. 3 is a cross-sectional view showing a modified example of the EL lamp in Fig. 1b.

Fig. 4 is a cross-sectional view when the EL lamp in Fig. 1b or Fig. 3 is attached to a power supply outlet.

Fig. 5 is a perspective view of a case type EL lamp.

Fig. 6 is a cross-sectional view taken along line B-B of the EL lamp in Fig. 5.

Fig. 7 is a cross-sectional view taken along line C-C of the EL lamp in Fig. 5.

Figs. 8(a) and (b) are plan views showing modified form examples of the EL lamp in Fig. 5.

Fig. 9 is a cross-sectional view showing a modified example of the EL lamp in Fig. 5.

Figs. 10(a) and (b) show one example of an illuminating direction changing means used for a using method of the EL lamp of the present invention, and Fig. 10(a) is a schematic side view when the EL lamp is attached and Fig. 10(b) is a plan view of the changing means.

Figs. 11(a) - (c) show another example of the illuminating direction changing means and Fig. 11(a) is a schematic side view thereof, Fig. 11(b) is an end surface view of the EL lamp attaching side, and Fig. 11(c) is a plan view when the EL lamp is attached.

Figs. 12(a) - (c) show still another example of the illuminating direction changing means, and Fig. 12(a) is a plan view when the EL lamp is attached, Fig. 12(b) is a schematic side view of the changing means, and Fig. 12(c) is an end surface view of the EL lamp attaching side.

Figs. 13(a) - (c) show still another example of the illuminating direction changing means, and Fig. 13(a) is a schematic plan view when the EL lamp is attached, Fig. 13(b) is an end surface view of the EL lamp attaching side, and Fig. 13(c) is a side view of the changing means.

Figs. 14(a) - (c) show still another example of the illuminating direction changing means, and Fig. 14(a) is a schematic plan view when the EL lamp is attached, Fig. 14(b) is an end surface view of the EL lamp attaching side, and Fig. 14(c) is a perspective view of the changing means.

Fig. 15 is a transverse sectional view of one example of an outlet used for the using method of the EL lamp in accordance with the present invention.

Fig. 16 is a longitudinal sectional view when the EL lamp is attached to the outlet in Fig. 15.

Fig. 17 is a transverse sectional view of another example of the outlet used for the using method of the EL lamp of the present invention.

Fig. 18 shows an example of use of the EL lamp of the present invention, and is a schematic perspective view of the front part in the room of an automobile wherein the EL lamp is made usable on the assistant seat.

Fig. 19 shows another example of use, and is a schematic perspective view of the rear part of an automobile wherein the EL lamp is made usable in the trunk.

Fig. 20 shows still another example of use, and is a schematic perspective view of the front part in the room of an automobile wherein the EL lamp is made usable on the rear seat.

### Detailed Description of the Invention

Hereinafter, detailed description is made on an EL lamp and a method of use thereof in accordance with the present invention based on embodiments.

Fig. 1a, Fig. 1b and Fig. 2 show one embodiment of a substrate type EL lamp in the EL lamp of the present invention. Both electrodes 12 and 13 are formed on a substrate 11 as electrode layers of desired patterns, and a phosphor luminous layer 15 and the light transmitting electrode layer 13′ are installed on the surface of the electrode 12 through an insulating layer 14. The above-mentioned both electrodes 12 and 13 form a connector part 16 at one end of an EL lamp L1, and it can be connected electrically to the power supply outlet for home or automobile. Accordingly, to reduce the contact resistance, gold plating is preferably applied to the end parts of the electrodes 12 and 13.

Fig. 3 shows an EL lamp L2 of another embodiment, whose aspect is such that the EL lamp L1 as shown in Fig. 1b and Fig. 2 is covered with a waterproof film 17 excluding the connector part 16.

In using the EL lamp L1 or L2, as shown in Fig. 4, the connector part 16 of the EL lamp is connected directly to the power supply outlet of a home power supply or automobile power supply having a contact part 16′ corresponding to the connector part 16, and thereby the phosphor luminous layer 15 emits light for illumination.

In addition, in the EL lamps L1 and L2 of the embodiments in Fig. 2 and Fig 3, each electrode, the phosphor luminous layer and the like are installed also on the back side of the substrate 11 likewise the above-mentioned, and thereby the EL lamp whose both side emit light can be fabricated.

Figs. 5 - 7 show a case type EL lamp L3, whose aspect is such that a casing 20 composed of synthetic resin which houses an EL light emitting part 27 providing a structure similar to the above-mentioned EL lamps L1 and L2 therein is constituted with a light-transmitting front plate 21 and a light-transmitting or non-light-transmitting rear plate 22, and the luminous surface of the EL light emitting part 27 inside the casing 20 faces the front plate 21. Connector pins 23 connected respectively to both lead electrodes of the EL light emitting part 27 are installed on the side surface of the casing 20, forming the connector part. The connector pins 23 are fixed firmly to the casing 20 so as to be able to connect electrically to the power supply outlet of home power supply or automobile power supply, and in this embodiment the pins are used, but receptacles may be used other than the pins.

In using the EL lamp L3, the connector part composed of the connector pins 23 is connected to the power supply outlet of home power supply or automobile power supply, and thereby the EL light emitting part 27 emits light, and the emitted light is transmitted through the front plate 21 of the casing to illuminate.

The external shape of the above-described respective EL lamps L1 - L3 is rectangular, that is, card shape, but the EL element is thin and excels in flexibility and the shape thereof can be changed freely, and therefore the shape of the EL element may be circular or oval other than the card shape, and the external shape of the EL lamp may be made circular or oval after the shape of the EL element. Also, the shape of the EL lamp is made as shown in Fig. 8(a), that is, the EL lamp can be folded at the dotted line, and thereby the lamp can be carried while folded or can be bent in use. Said bendable portion (the dotted line) has a mechanical tolerance endurable against the bending load applied in attaching and detaching the EL lamp to and from the outlet by human fingers, and further, can be folded intentionally and easily by a human force and restored to the original state. Both substrate type and case type EL lamps can be bent intentionally in a manner described above. In the case of a substrate type, it is preferable that, as shown in Fig. 8(a), an EL light emitting part is installed on a portion exclusive of a bendable portion which is made bendable by, for example, making the dotted line thin, and in the case of a case type, bend is made possible by, for example, applying a means for bending at said dotted line. Further, as shown in Fig. 8(b), the portion of the EL lamp corresponding to the connector part is made thin, and that portion is made bendable at the dotted line and thereby the direction of illumination can be changed freely by adjusting the angle of the luminous surface of the EL lamp at that portion likewise the using method as described later.

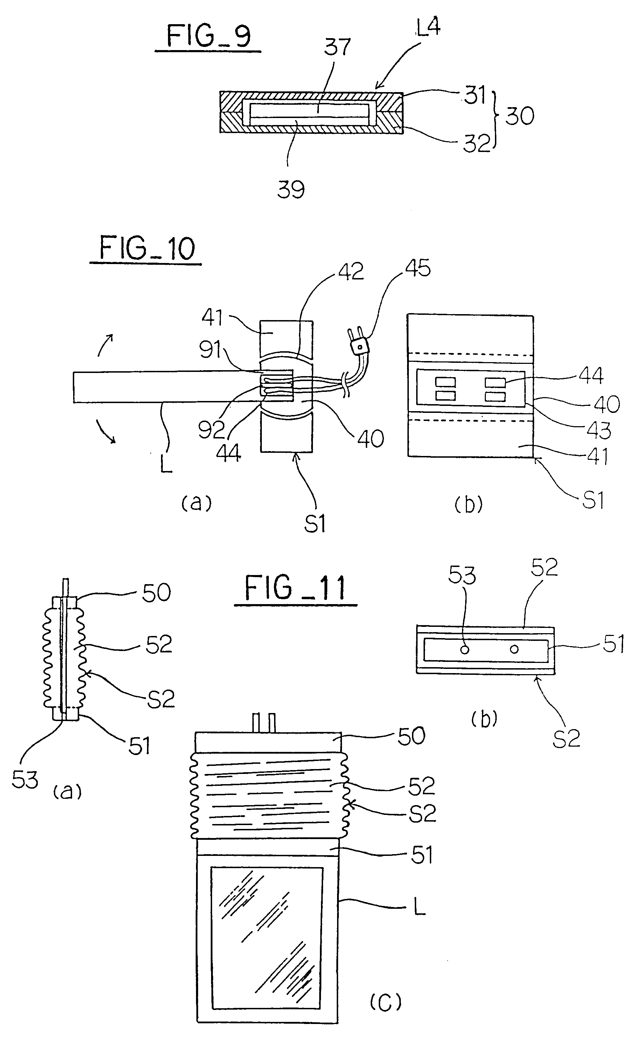

An EL lamp L4 as shown in Fig. 9 is a modified example of the EL lamp L3 in Fig. 5, wherein a casing 30 is constituted with a front plate 31 composed of acryl resin and a back plate 32 composed of hard polyvinyl chloride, and a sheet-shaped drying agent layer 39 is installed along the inner wall of the back plate 32. The drying agent layer 39 also provides a function of a spacer occupying a gap other than an EL light emitting part 37 in the casing 30. The drying agent 39 may be fixed to the back plate 32, or may be installed in the casing 30 in an attachable/detachable fashion.

Because of the card shape, the above-described respective EL lamps L1 - L4 are convenient for carrying, not bulky when put in a pocket of a dress or trouser or a handbag, and are strong against an external force, and the EL lamps, particularly the connector parts thereof are not damaged even if attaching to and detaching from the power supply outlet, in a case where a portion of the EL lamp reinforced with the reinforcement which is, for example, a substrate or a casing is held by fingers for attaching and detaching, are performed repeatedly.

As one application of such EL lamps, the back light source of the liquid crystal TV is cited as described previously. This means that such an aspect is also considered that a liquid crystal TV is constituted so that the EL lamp of the present invention can be attached to and detached from it, and the card-shaped EL lamp is inserted into the liquid crystal TV as required as a light source.

Furthermore, as mentioned above, the EL lamp can obtain various colors of luminescence, and therefore it can provide a function of decoration which creates a mysterious mood by considering about colors in addition to the brightness thereof.

Next, description is made on the using method of the EL lamp of the present invention. As described before, the EL lamps L1 - L4 of the respective embodiments are used by inserting the connector part directly to the power supply outlet, and are very convenient if the irradiating direction can be changed freely by adjusting the angle of attachment of the EL lamp. For this purpose, the illuminating direction changing means has only to be used which has an outlet-side connection part for attaching to the power supply outlet and an EL lamp-side connection part for attaching and detaching the connector part of the EL lamp.

Hereinafter, description is made on a use example using that changing means.

A changing means S1 as shown in Figs. 10(a) and (b) is for supporting the EL lamp L of the present invention in a manner capable of changing in the direction shown by an arrow, and is constituted with a changing body 40 which houses a connector part 91 of the EL lamp L and connects firmly the EL lamp L, and a supporting body 41 holding the changing body 40 slidably. The changing body 40 can change in the direction shown by an arrow by a circular-arc-shaped sliding part 42 formed in the changing body 40 and the supporting body 41. An opening part 43 housing the connector part 91 of the EL lamp L is formed in the changing body 40, and a connection part 44 electrically contacting connector pins 92 installed in the connector part 91 while clamp-holding them is attached to the opening part 43. As is obvious from the drawing, the connection part 44 is connected to a plug 45 by a wire.

In such a changing means S1, when the plug 45 is inserted into the home outlet and the changing means S1 is used while fixed to a desk or wall, the angle of the EL lamp L can be set arbitrarily, and therefore the irradiating direction can be changed freely.

A changing means S2 as shown in Figs. 11(a) - (c) has an outlet-side connection part 50 serving as a plug for inserting into the home outlet and an EL lamp-side connection part 51 wherein connector pins (not illustrated) located in the connector part of the EL lamp L are inserted. Both of the connection parts 50 and 51 are connected by a bellows-shaped plate body 52 capable of changing, and the both connection parts 50 and 51 are connected by a wire installed in the plate body 52. Pin holes 53 electrically contacting the connector pins of the EL lamp L are formed in the EL lamp-side connection part 51. The plate body 52 has a sufficient rigidity so as not to be bent easily by the tare of the EL lamp L or an external vibration, but the adjustment of the angle of the EL lamp L can be made simply, and it is composed, for example, of metal, plastics or rubber. In this changing means S2, the outlet-side connection part 50 is inserted directly into the outlet, and the EL lamp L is attached to the EL lamp-side connection part 51, and thereby the irradiating direction of the EL lamp can be changed freely.

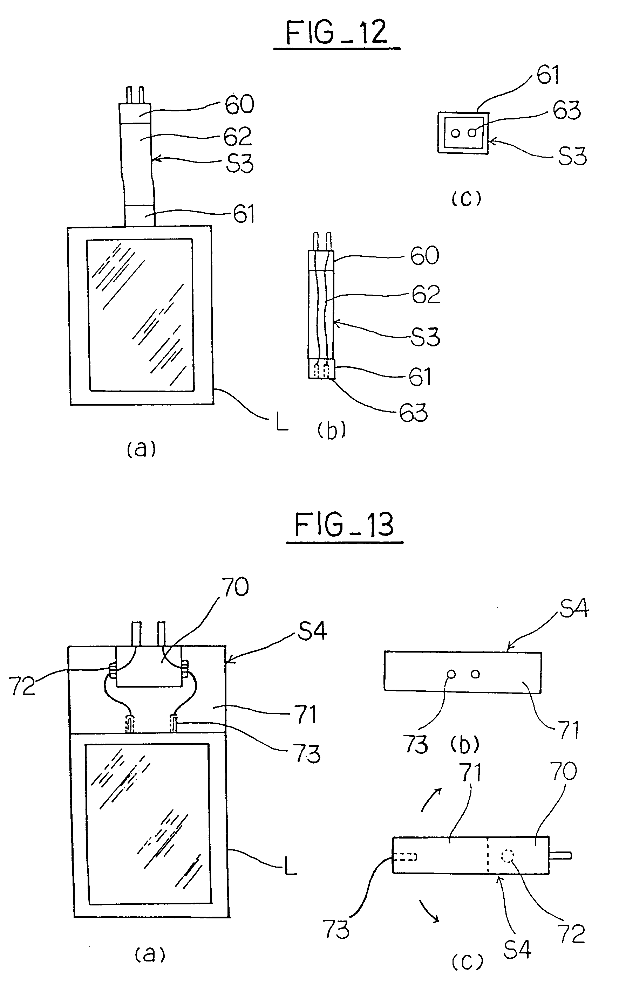

A changing means S3 as shown in Figs. 12(a) - (c) has a shape similar to the changing means S2 as shown in Fig. 11, and is constituted with an outlet-side connection part 60 having a function of a plug for inserting into the home outlet, an EL lamp-side connection part 61 wherein connector pins (not illustrated) located in the connector part of the EL lamp L are inserted and a tubular flexible body 62 which connects both of the connection parts 60 and 61 and can change and rotate freely. Furthermore, the both connection parts 60 and 61 are connected by wires installed in the flexible body 62, and pin holes 63 capable of electric contact with the connector pins of the EL lamp L are formed in the EL lamp-side connection part 61. The flexible body 62 has a sufficient rigidity so as not to be displaced easily by the tare of the EL lamp L or an external vibration, but the direction of the EL lamp L can be changed arbitrarily, and it is composed of a corrugated tube, metal, plastics, rubber or the like. This changing means S3 has only to be used likewise the changing means S2, and the EL lamp L can be made to change and rotate by the flexible body 62, that is, the direction of the EL lamp L can be changed to all directions.

A changing means S4 as shown in Figs. 13(a) - (c) consists of a supporting body 70 serving also as a plug for inserting into the outlet and a changing body 71 for electrically connecting the connector part of the EL lamp L. The supporting body 70 and the changing body 71 are connected so that the changing body 71 can change easily by a sliding part 72 formed in that supporting body 70 and the changing body 71, and the sliding part 72 is constituted, for example, with a disc-shaped protrusion and a concave part engaging this protrusion, and the protrusion and the concave part may be formed in either of the supporting body 70 and the changing body 71, and they have only to be in a corresponding positional relation. Pin holes 73 electrically contacting the connector pins of the EL lamp L are formed in the changing body 71. In this changing means S4, the EL lamp L is attached by inserting into the outlet, and thereby the angle of the EL lamp L can be adjusted because the changing body 71 can change freely.

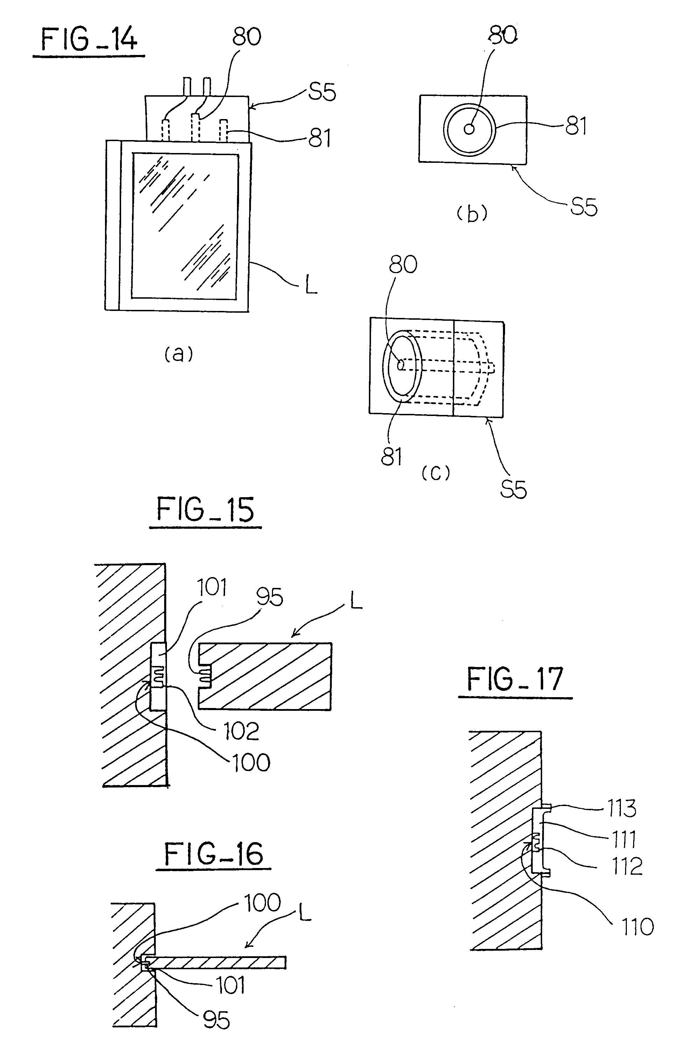

A changing means S5 as shown in Figs. 14(a) - (c) is for supporting the EL lamp L rotatably, and one end thereof has a function of a plug and the other end has a function of electrically connecting the connector part of the EL lamp L. Then, at the other end of the changing means S5, a pin hole 80 electrically contacting one of connector pins (not illustrated) of the EL lamp L and an annular pin hole 81 electrically contacting the other connector pin (not illustrated) disposed on a circle concentric with the pin hole 80 are formed, and the respective pin holes 80 and 81 are connected to the plug by wires. Accordingly, by inserting the connector pins of the EL lamp L into these pin holes 80 and 81, the EL lamp L can be rotated freely with the connector pin inserted into the pin hole 80 acting as an axis.

Fig. 15 - Fig. 17 show another example of use. The power supply outlet as shown here has an opening part wherewith the connector part of the EL lamp can be engaged. Accordingly, the EL lamp is used by inserting directly into the outlet without using the lluminating direction changing means.

An outlet 100 has an opening part 101 wherewith a connector part 95 of the EL lamp L can be engaged, and an outlet-side terminal 102 electrically adaptable to the connector part 95 of the EL lamp L is formed in that opening part 101.

In addition, even when the outlet 100 is formed integrally on an arbitrary wall or the like of a house or building, another outlet of arbitrary shape is formed separately in advance, and may be attached to the home power supply when used.

Fig. 16 shows the state that the EL lamp L is attached to the outlet 100, and the connector part 95 of the EL lamp L is supported by the opening part 101 of the outlet 100.

An outlet 110 as shown in Fig. 17 has an outlet-side terminal 112 adaptable to the connector part of the EL lamp L and a catching part 113 for supporting the EL lamp L more surely. In this aspect, the EL lamp L is supported firmly by the catching part 113, and therefore an opening part 111 can be made relatively shallow.

By installing the outlet 100 and 110 as shown in Fig. 15 and Fig. 17 in an automobile, the EL lamp of the present invention can be used conveniently, combined with that it is of portable type.

For the applications to automobiles, automobiles of all structures and shapes for passenger, cargo-passenger, sports, cargo, omnibus, special uses, bicycle and the like correspond. Also, wiring of the outlet in the electric system has only to be made by a commonplace method as long as the safety is secured.

Also, the place where the outlet is installed has no particular limitation, and places convenient if illumination is provided at night or in the dark equivalent thereto, for example, the lid or the inside of the glove box, the underside of the dashboard, the back face of front seat, the ceiling or support in the car room, the rear side of the engine room, the inside of the engine room, the rear side of the trunk lid, the inside of the trunk room and the like are considered.

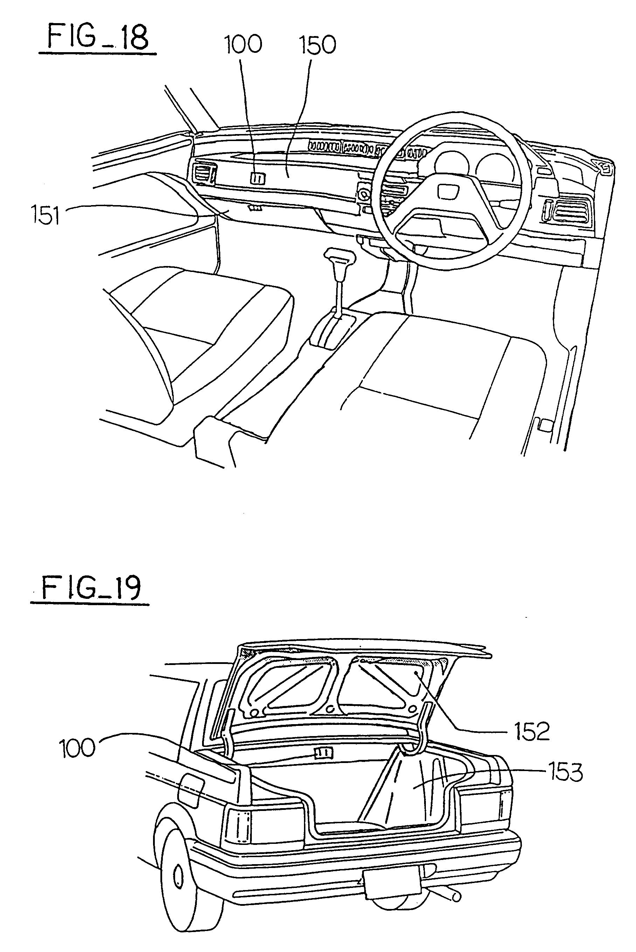

In Fig. 18 specifically and schematically showing the front part in the room of a passenger car, the outlet 100 is installed at the upper position of a glove box 151 in an instrument panel 150. Road maps, miscellaneous articles necessary for driving or convenient if exist and the like are usually stored in the glove box 151. The road maps are often taken out during driving to be consulted, particularly at night, a precise map is hard to be seen by a room lamp only, and in the case where the inside of the glove box 151 is dark and cannot be seen well when taking a wanted article out of the glove box 151, by inserting the EL lamp into the outlet 100 to light the EL lamp, the inside of the glove box 151 can be made bright, and the wanted article can be found easily, and further the map is lighted up more clearly by the EL lamp, and the problem of hard viewing can be solved. Also, by lighting the EL lamp with sufficient brightness, a book can be read on the assistant seat.

Fig. 19 shows the rear part of an automobile in the state that a trunk lid 152 of the passenger car is opened, and the outlet 100 is installed in a trunk room 153. A set of repairing tools for automobile and the like are stored in the trunk room 153, and in the case where a trouble has occurred or a tire has punctured at night, the trunk lid 152 is opened and the EL lamp is inserted into this outlet 100 to be lit, and thereby necessary repairing tools can be taken out very conveniently, and also baggages can be taken in and out with ease at night.

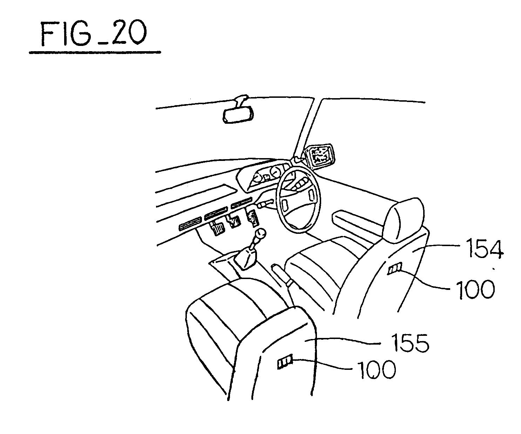

Fig. 20 shows the case where the outlet 100 are installed respectively on the back faces of a drive seat 154 and an assistant seat 155, and in this case, one can read a book or write letters on the rear seat.

In addition, in the case of using the EL lamp at night, a means of showing the position of the outlet is preferably installed to find it easily. Specifically, for example, another EL lamp or a light emitting diode (LED) may be mounted near the outlet to be lit at night, a phosphor paint may be coated around the outlet, or a small-sized lamp may be mounted to light up the outlet.

## Claims

1. A flat-plate-shaped electroluminescence lamp (EL lamp) comprising an electroluminescence light emitting part (27) (EL light emitting part) a connector part (16) which is connected to both electrodes (12,13) of the EL light emitting part and is formed so as to be attachable to and detachable from a power supply outlet, and a reinforcement (11) to give the EL lamp a endurable mechanical strength,
characterized in that the connector part (16) is provided directly on the substrate (11) carrying the EL light emitting part, said reinforcement being of such a mechanical strength that it withstands the bending load applied in attaching and detaching the EL lamp to and from the power supply outlet in a repeated manner in a case where a portion of the EL lamp reinforced with said reinforcement is held by human fingers for attaching and detaching.

2. An EL lamp in accordance with claim 1, characterized in that said mechanical strength is endurable against a bending load of at least 30 kg.

3. The EL lamp of claim 1 or claim 2, characterized in that said reinforcement is a substrate (11), and terminals of the both electrodes of the EL light emitting part are formed on said substrate.

4. The EL lamp of claim 1 or claim 2, characterized in that said reinforcement is a casing (20), and said casing has the connector part (23).

5. The EL lamp of claim 4, characterized in that a drying agent (39) is housed in said casing (30) together with the EL light emitting part (37).

6. The EL lamp of one of claims 1-5, characterized by a means (52) capable of changing the illuminating direction of the EL light emitting part.

7. The EL lamp of one of claims 1-6, characterized in that it is adapted for being inserted in a supply outlet (100) having an opening part (101) for engagement with said connector part of said EL lamp.

8. The EL lamp of claim 7, characterized in that it is attachable to and detachable from a power supply outlet (100) of an automobile, said power supply outlet having said opening part (101).

## Patentansprüche

1. Flachplattenförmige elektroluminiszente Lampe (EL-Lampe) mit einem Elektrolunminiszenzlichtemitterteil (27) (EL-Lichtemitterteil), einem Anschlußteil (16), das mit beiden Elektroden (12, 13) des EL-Lichtemitterteils verbunden und derart ausgebildet ist, daß es an einer Stromsteckdose anbringbar und von dieser lösbar ist, und mit einer Verstärkung (11), um der EL-Lampe beständige mechanische Festigkeit zu verleihen,
dadurch gekennzeichnet, daß das Anschlußteil (16) unmittelbar auf dem das EL-Lichtemitterteil tragenden Substrat (11) vorgesehen ist, wobei die Verstärkung eine derartige mechanische Festigkeit aufweist, daß sie der Biegebeanspruchung standhält, die bei wiederholtem Anbringen und Lösen der EL-Lampe an bzw. von der Stromsteckdose aufgebracht wird, wenn ein Bereich der durch die Verstärkung verstärkten EL-Lampe zum Anbringen und Lösen von menschlichen Fingern gehalten wird.

2. EL-Lampe nach Anspruch 1, dadurch gekennzeichnet, daß die mechanische Festigkeit einer Biegebeanspruchung von wenigstens 30kg standhält.

3. EL-Lampe nach Anspruch 1 oder 2, dadurch gekennzeichnet, daß die Verstärkung ein Substrat (11) ist und Anschlüsse der beiden Elektroden des EL-Lichtemitterteils auf dem Substrat ausgebildet sind.

4. EL-Lampe nach Anspruch 1 oder 2, dadurch gekennzeichnet, daß die Verstärkung ein Gehäuse (20) ist und das Gehäuse das Anschlußteil (23) aufweist.

5. EL-Lampe nach Anspruch 4, dadurch gekennzeichnet, daß in dem Gehäuse (30), zusammen mit dem EL-Lichtemitterteil (37), ein Trocknungsmittel (39) vorgesehen ist.

6. EL-Lampe nach einem der Ansprüche 1-5, gekennzeichnet durch eine Einrichtung (52), die in der Lage ist, die Leuchtrichtung des EL-Lichtemitterteils zu ändern.

7. EL-Lampe nach einem der Ansprüche 1-6, dadurch gekennzeichnet, daß sie zur Einführung in eine Stromsteckdose (100) ausgebildet ist, die einem Öffnungsbereich (101) zum Zusammengreifen mit dem Anschlußteil der EL-Lampe aufweist.

8. EL-Lampe nach Anspruch 7, dadurch gekennzeichnet, daß sie an einer Stromsteckdose (100) eines Automobils anbringbar und von dieser lösbar ist, wobei die Stromsteckdose den Öffnungsbereich (101) aufweist.

## Revendications

1. Une lampe électroluminescente (lampe EL) en forme de plaque plane, comprenant un élément émetteur de lumière électroluminescent (27) (élément émetteur de lumière EL), un élément connecteur (16) qui est raccordé aux deux électrodes (12, 13) de l'élément émetteur de lumière EL et est formé de manière à pouvoir être fixé à et dégagé d'une sortie d'alimentation de courant, et un renforcement (11) destiné à donner à la lampe EL une résistance mécanique durable,
caractérisée en ce que l'élément connecteur (16) est prévu directement sur le substrat (11) portant l'élément émetteur de lumière EL, ledit renforcement étant d'une résistance mécanique telle qu'il résiste à la charge de flexion appliquée lors de la fixation et du dégagement, de manière répétée, de la lampe EL à et de la sortie d'alimentation de courant au cas où une partie de la lampe EL renforcée par ledit renforcement est maintenue par des doigts humains pour la fixation et le dégagement.

2. Une lampe EL suivant la revendication 1, caractérisée en ce que la résistance mécanique peut supporter une charge de flexion d'au moins 30 kg.

3. La lampe EL suivant la revendication 1 ou la revendication 2, caractérisée en ce que ledit renforcement est un substrat (11) et les bornes des deux électrodes de l'élément émetteur de lumière EL sont formées sur ledit substrat.

4. La lampe EL suivant la revendication 1 ou la revendication 2, caractérisée en ce que ledit renforcement est un boîtier (20), et ledit boîtier présente l'élément connecteur (23).

5. La lampe EL suivant la revendication 4, caractérisée en ce qu'un agent de dessication (39) est logé dans ledit boîtier (30), ensemble avec l'élément émetteur de lumière EL (37).

6. La lampe EL suivant l'une des revendications 1 à 5, caractérisée par un moyen (52) susceptible de modifier la direction d'illumination de l'élément émetteur de lumière EL.

7. La lampe EL suivant l'une des revendications 1 à 6, caractérisée en ce qu'elle est adaptée pour être insérée dans une sortie d'alimentation (100) présentant un élément d'ouverture (101) destiné à venir en prise avec ledit élément connecteur de ladite lampe EL.

8. La lampe EL suivant la revendication 7, caractérisée en ce qu'elle peut être fixée à et dégagée d'une sortie d'alimentation de courant (100) d'une voiture automobile, ladite sortie d'alimentation de courant présentant ledit élément d'ouverture (101).
